# EUROPÄISCHE PATENTSCHRIFT

(11) **EP 3 189 254 B1**
(45) Veröffentlichungstag und Bekanntmachung des Hinweises auf die Patenterteilung: **04.07.2018**
(21) Anmeldenummer: 15757470.8
(22) Anmeldetag: 26.08.2015
(51) Int. Cl.: F16J 15/16, F16F 9/36, F15B 15/14, F16J 15/3208, F16J 15/48, F16J 15/56, F16J 15/3228

(54) **DICHTUNGSANORDNUNG MIT DRUCKAKTIVIERBAREM VORSPANNELEMENT**
SEALING ARRANGEMENT WITH PRESSURE-ACTIVATABLE PRE-TENSIONING ELEMENT
SYSTÈME DE JOINT D'ÉTANCHÉITÉ MUNI D'UN ÉLÉMENT DE PRÉCONTRAINTE ACTIVABLE PAR PRESSION

(30) Priorität: 01.09.2014 DE 102014217392
(43) Veröffentlichungstag der Anmeldung: 12.07.2017
(73) Patentinhaber: Trelleborg Sealing Solutions Germany GmbH, 70565 Stuttgart (DE)
(72) Erfinder: JORDAN, Holger, 73765 Neuhausen a.d. F. (DE); SEELING, Eric, 71672 Marbach am Neckar (DE)
(74) Vertreter: Kohler Schmid Möbus Patentanwälte
(86) Internationale Anmeldenummer: PCT/EP2015/069537
(87) Internationale Veröffentlichungsnummer: WO 2016/034474

(56) Entgegenhaltungen:
- DE-A1- 10 352 674
- DE-A1-102012 202 571
- DE-C1- 3 320 515
- JP-A- H0 446 274
- US-A- 3 143 757
- US-A- 5 520 092

## Beschreibung

Die Erfindung betrifft eine Dichtungsanordnung mit einem ersten Maschinenteil und mit einem zweiten Maschinenteil, wobei die beiden Maschinenteile unter Ausbildung eines Dichtspalts voneinander beabstandet entlang einer Bewegungsachse relativ zueinander bewegbar angeordnet sind. Die Dichtungsanordnung umfasst ein Dichtungselement mit einer Dichtlippe, das in einer Dichtungshaltestruktur eines der beiden Maschinenteile gehalten angeordnet ist, wobei sich die Dichtlippe in axialer Richtung von der Dichtungshaltestruktur wegerstreckt. Ein Vorspannelement dient dazu, die Dichtlippe gegen eine Dichtfläche des zweiten Maschinenteils vorzuspannen, um einen Hochdruckbereich gegenüber einem Niederdruckbereich der Dichtungsanordnung abzudichten. Das Vorspannelement ist in einer Haltenut des ersten Maschinenteils angeordnet.
Derartige Dichtungsanordnungen sind bei vielen technischen Anwendungen, beispielsweise bei Schwingungsdämpfern, hydraulischen Aktuatoren, Servozylindern, oder auch Federungen im Bereich der Zweiradtechnik, etabliert und beispielsweise aus der DE 10 2012 218 358 A1 und der DE 10 2012 202 571 A1 bekannt geworden. Die Standzeiten der Dichtungsanordnungen hängen in entscheidender Weise von einem Verschleiß des verbauten Dichtungselements ab. Ein für den Verschleiß des Dichtungselements relevanter Faktor ist dabei die Reibung der an der Dichtfläche des zweiten Maschinenteils anliegenden Dichtlippe des Dichtungselements. Bei einer Reihe von technischen Anwendungen wird die Dichtungsanordnung im Einbauzustand nur selten, d.h. sporadisch, betätigt, wobei die beiden Maschinenteile dennoch im Betriebseinsatz anhaltend im Sinne eines Leerlaufbetriebs gegeneinander bewegt werden. Dies ist beispielsweise bei sogenannten Führerhauskippzylindern zum Verkippen und ggf. Halten des verkippten Führerhauses eines Lastkraftwagens gegenüber einem Fahrzeugrahmen der Fall. Derlei Dichtungsanordnungen müssen ungeachtet Ihrer Dauerbeanspruchung während des Leerlaufbetriebs im Bedarfsfall einsatzbereit sein und ein ausreichendes Dichtungsvermögen gewährleisten.

Aufgabe der Erfindung ist es, eine eingangs genannte Dichtungsanordnung derart weiterzubilden, dass diese bei geringen Fertigungskosten eine verbesserte Standzeit aufweist und dabei zugleich für Hoch- und Höchstdruckanwendungen geeignet ist. Die Dichtung soll insbesondere auch für einen vorstehend erläuterten Leerlaufbetrieb geeignet sein.

Die erfindungsgemäße Aufgabenstellung wird durch eine Dichtungsanordnung mit den in Patentanspruch 1 angegebenen Merkmalen gelöst.

Vorteilhafte Weiterbildungen der Erfindung sind in den Unteransprüchen angegeben.

Bei der erfindungsgemäßen Dichtungsanordnung wird das Vorspannelement bzw. eine dem Hochdruckbereich zuweisende Stirnseite des Vorspannelements, aufgrund der fluidischen Verbindung der Haltenut mit dem Hochdruckbereich mit dem im Hochdrukbereich herrschenden Betriebsdruck eines Arbeitsmediums, insbesondere Arbeitsfluids, beaufschlagt. Das Vorspannelement wird dadurch in der Haltenut in Richtung der Bewegungsachse gegen die und entlang der Keilführungsfläche gepresst und unter Anlage an der Keilführungsfläche, sofern das Vorspannelement elastisch verformbar ist, verformt. Das Vorspannelement drückt infolgedessen die Dichtlippe des Dichtungselements mit einer aus dem jeweiligen Betriebsdruck abgeleiteten Anpresskraft gegen die Dichtfläche des zweiten Maschinenteils. Dies bedeutet, dass das Dichtvermögen des Dichtungselements durch den im Hochdruckbereich der Dichtungsanordnung herrschenden Betriebsdruck gesteuert werden kann. Die Dichtlippe liegt an der Dichtfläche des zweiten Maschinenteils mit anderen Worten mit einer Kontaktpressung an, die sich zumindest über ein definiertes Betriebsdruckintervall mit dem im Hochdruckbereich der Dichtungsanordnung herrschenden Betriebsdruck gleichsinnig verändert. Steigt der im Hochdruckbereich herrschende Betriebsdruck der Dichtungsanordnung, den es mittels des Dichtungselements gegenüber dem Niederdruckbereich abzudichten gilt, so steigt auch die Anpresskraft, mit der die Dichtlippe des Dichtungselements durch das Vorspannelement gegen die Dichtfläche des zweiten Maschinenteils gepresst (vorgespannt) wird und umgekehrt. Dadurch kann ein dem Bedarf entsprechendes dynamisches Dichtungsvermögen des Dichtungselements auf konstruktiv einfachste Weise realisiert werden. Die Dichtungsanordnung ist darüber hinaus im besonderen Maße für die eingangs erläuterten technischen Anwendungen geeignet, bei denen die beiden Maschinenteile der Dichtungsanordnung anhaltend passiv gegeneinander verstellt werden, ohne dass die Dichtungsanordung tatsächlich betätigt (aktiviert) wird. Die Reibung zwischen der Dichtlippe und der Dichtfläche des zweiten Maschinenteils wird bei der erfindungsgemäßen Dichtungsanordnung für einen solchen "Leerlaufbetrieb" der Dichtungsanordnung minimiert, indem die Dichtlippe die Dichtfläche im nicht-druckbeaufschlagten Betriebszustand der Dichtungsanordnung ohne eine Kontaktpressung bzw. Vorspannung kontaktiert. Einem unnötigen Verschleiß des Dichtungselements kann dadurch selbst bei hohen Beschleunigungen bzw. Bewegungsgeschwindigkeiten der beiden Maschinenteile relativ zueinander zuverlässig entgegengewirkt werden. Dadurch, dass die Dichtungshaltestruktur eine oder mehrere Nuten umfasst, in der das Dichtungselement im Presssitz gehalten angeordnet ist, kann das Dichtungselement auf einfache Weise in die Nuten der Dichtungshaltestruktur eingepresst werden. Dies ist unter fertigungstechnischen Aspekten vorteilhaft. Im Falle eines als Radialdichtungselement ausgebildeten Dichtungselements kann dies beispielsweise über einen in das erste Maschinenelement eingeführten Montagedorn erfolgen. Die erfindungsgemäße Dichtungsanordnung weist einen einfachen konstruktiven Aufbau auf und ist im Übrigen aufgrund der geringen Anzahl ihrer Bauteile kostengünstig zu fertigen.
Die Keilführungsfläche ist erfindungsgemäß vorzugsweise unter einem Winkel α mit 20° ≤ α ≤ 80° zur Dichtfläche schräg verlaufend angeordnet. Je kleiner der Winkel α ist, desto feinfühliger ist dabei das Ansprechverhalten der Dichtungsanordnung auf Änderungen des Betriebsdrucks.
Nach einer bevorzugten Weiterbildung der Erfindung kann die Keilführungsfläche zumindest zwei Längsabschnitte aufweisen, die mit unterschiedlichen Winkeln α zur Dichtfläche schräg verlaufend angeordnet sind. Dadurch kann beispielsweise das Ansprechverhalten der Dichtungsanordnung dem Bedarf entsprechend eingestellt werden. So kann die Keilführungsfläche beispielsweise einen dem Hochdruckbereich zuweisenden ersten Längsabschnitt mit einer geringeren ersten Steigung gegenüber der Dichtfläche und einen sich daran in Richtung auf die Niederdruckseite anschließenden zweiten Längsabschnitt mit einer gegenüber der ersten Steigung größeren zweiten Steigung aufweisen.
Im Hinblick auf eine möglichst geringe Reibung zwischen der Dichtlippe und der Dichtfläche im eingangs genannten Leerlaufbetrieb der Dichtungsanordnung ist das Vorspannelement erfindungsgemäß derart dimensioniert, dass das Dichtungselement im nicht druckbeaufschlagten Zustand des Hochdruckbereichs ohne eine Vorspannung an der Dichtfläche anliegt. Unter fertigungstechnischen Gesichtspunkten ist die Keilführungsfläche der Haltenut vorteilhaft mit einer niederdruckseitig angeordneten Nutflanke der Haltenut verbunden oder bildet diese. Dadurch kann die Keilführungsfläche (gemeinsam mit der Haltenut) unmittelbar durch das Material des ersten Maschinenteils oder durch einen am ersten Maschinenteil befestigtes Einsatzteil gebildet werden.
Die Keilführungsfläche und/oder ein Nutgrund der Haltenut kann zwecks eines möglichst geringen Stick-slip-Effekts bzw. Gleitreibung des daran anliegenden Vorspannelements erfindungsgemäß mit einer, vorzugsweise trockenschmierenden, Gleitbeschichtung versehen sein. Die Gleitbeschichtung kann insbesondere ein Polymermaterial, beispielsweise Polytetrafluoräthylen, oder auch ein Metall bzw. eine Metalllegierung, umfassen.

Das Vorspannelement kann, insbesondere im Falle der durch die Haltenut bzw. das erste Maschinenteil gebildeten Keilführungsfläche gummielastisch verformbar sein. Das Vorspannelement besteht dabei vorzugsweise aus einem Elastomer.

Für eine Feineinstellung einer nicht beanspruchten Grundvorspannung der Dichtlippe gegen die Dichtfläche im nicht-druckbeaufschlagten Zustand der Dichtungsanordnung kann die Haltenut bzw. das erste Maschinenteil ein Justierteil für das Vorspannelement aufweisen. Das Justierteil kann dabei am ersten Maschinenteil quer zur Bewegungsachse der beiden Maschinenteile relativ zum zweiten Maschinenteil verstellbar angeordnet sein. Das Vorspannelement ist nutgrundseitig am Justierteil abgestützt. Das Justierteil kann ein zum Nutgrund der Haltenut separates Bauteil sein oder diesen umfassen. Nach einer Weiterbildung der Erfindung ist das Justierteil manuell oder druckmittelbetätigt bzw. elektromotorisch verstell bar.
Gemäß einer bevorzugten Weiterbildung der Erfindung weist die Haltenut eine zweite Nutflanke auf, die zur Bewegungsachse schräg verlaufend angeordnet ist. Die zweite Nutflanke ist der ersten Nutflanke in axialer Richtung gegenüberliegend angeordnet. Dadurch kann die Dichtungsanordnung auch bei einer Druckinversionslage zwischen dem Hochdruckbereich und dem Niederdruckbereich und einer ggf. kurzfristigen hochruckseitigen axialen Auslenkung des Vorspannelements aus seiner axialen Ausgangsposition in dieselbe zurückgleiten. Die Ausgangsposition entspricht der axialen Position des Vorspannelements relativ zum ersten Maschinenteil im nicht-druckbeaufschlagten Betriebszustand der Dichtungsanordnung.

Das Dichtungselement kann aus Polytetrafluorethylen oder einem anderen zähelastischen Werkstoff, insbesondere Polymerwerkstoff, gebildet sein.

Die Nut/Nuten der Dichtungshaltestruktur kann/können sich insbesondere in Richtung auf die Bewegungsachse erweitern. Dadurch kann das Dichtungselement einerseits vereinfacht mit der Dichtungshaltestruktur des ersten Maschinenteils verpresst werden. Darüber hinaus kann dadurch einem Einkerben bzw. ein Abscheren des Dichtungselements im Bereich einer Nutkante der Nuten bei axial am Dichtungselement angreifenden Kräften entgegengewirkt werden.

Das Dichtungselement weist bevorzugt einen oder mehrere Gleitführungsabschnitte auf, an dem/denen das zweite Maschinenteil im Gleitspiel-Formschluss geführt ist. Das Dichtungselement dient dadurch einer Lagerung des zweiten Maschinenteils. Der Gleitführungsabschnitt ist dabei in Querrichtung zur Bewegungsachse an dem ersten Maschinenteil formschlüssig anliegend abgestützt, so dass die Lagerungsqualität allein durch eine zähelatische oder gummielastische Verformung, nicht aber durch eine Deflektion bzw. Auslenkung des Gleitführungsabschnitts gegenüber dem ersten Maschinenteil bestimmt ist. Das durch den Gleitführungsabschnitt gebildete Gleitlager für das zweite Maschinenteil kann dadurch quer zur Bewegungsachse zäh- oder gummielastisch verformbar ausgebildet sein.

Nach einer bevorzugten Weiterbildung der Erfindung kann das Dichtungselement eine zweite Dichtlippe aufweisen, die sich von der Dichtungshaltestruktur in einer zur ersten Dichtlippe entgegengesetzten Richtung axial wegerstreckt. Der zweiten Dichtlippe kann in einer zu der ersten Dichtlippe entsprechenden Weise ein in einer Haltenut angeordnetes Vorspannelement zugeordnet sein. Auch die zweite Haltenut kann mit zumindest einer Keilführungsfläche versehen sein.

Nach der Erfindung kann eines der beiden Maschinenteile insbesondere als ein Zylinder und das andere der beiden Maschinenteile als ein im Zylinder geführter Kolben ausgebildet sein. Das Dichtungselement ist in diesem Fall als ein ringförmiges Radialdichtungselement ausgebildet.

Die Dichtungsanordung kann bei einer Vielzahl unterschiedlicher technischer Aufgaben eingesetzt werden. So kann die Dichtungsanordnung beispielsweise als ein hydraulischer Aktuator, insbesondere Führerhauskippzylinder, als ein Schwingungsdämpfer oder als ein Stoßdämpfer ausgebildet sein.

Nachfolgend wird die Erfindung anhand von in der Zeichnung dargestellten Ausführungsbeispielen näher erläutert.

In den Figuren sind die Ausführungsbeispiele so dargestellt, dass die erfindungswesentlichen Bauteile sowie deren funktionelles Zusammenspiel gut zu erkennen sind.

In der Zeichnung zeigen:
- Fig. 1: eine Dichtungsanordnung mit zwei gegeneinander verstellbar angeordneten Maschinenteilen, und mit einem Dichtungselement zum Abdichten eines Hochdruckbereichs gegenüber einem Niederdruckbereich der Dichtungsanordnung, wobei eine Dichtlippe des Dichtungselements über ein druckaktivierbares Vorspannelement gegen die Dichtfläche eines der beiden Maschinenteile vorspannbar ist.
- Fig. 2: die Dichtungsanordnung aus Fig. 1 bei einer Druckbeaufschlagung des Hochdruckbereichs mit einem ersten Betriebsdruck P₁;
- Fig. 3: die Dichtungsanordnung aus Fig. 1 bei einer Druckbeaufschlagung des Hochdruckbereichs mit einem maximalen Betriebsdruck Pₘₐₓ;
- Fig.4: eine weiteres Ausführungsbeispiel der Dichtungsanordnung;
- Fig. 5: eine Dichtungsanordnung mit einem Justierteil zum Einstellen einer nicht beanspruchten Grundvorspannung der Dichtlippe gegen eine Dichtfläche eines der beiden Maschinenteile im nicht-druckbeaufschlagten Zustand der Dichtungsanordnung;
- Fig. 6: ein weiteres Ausführungsbeispiel der Dichtungsanordnung.

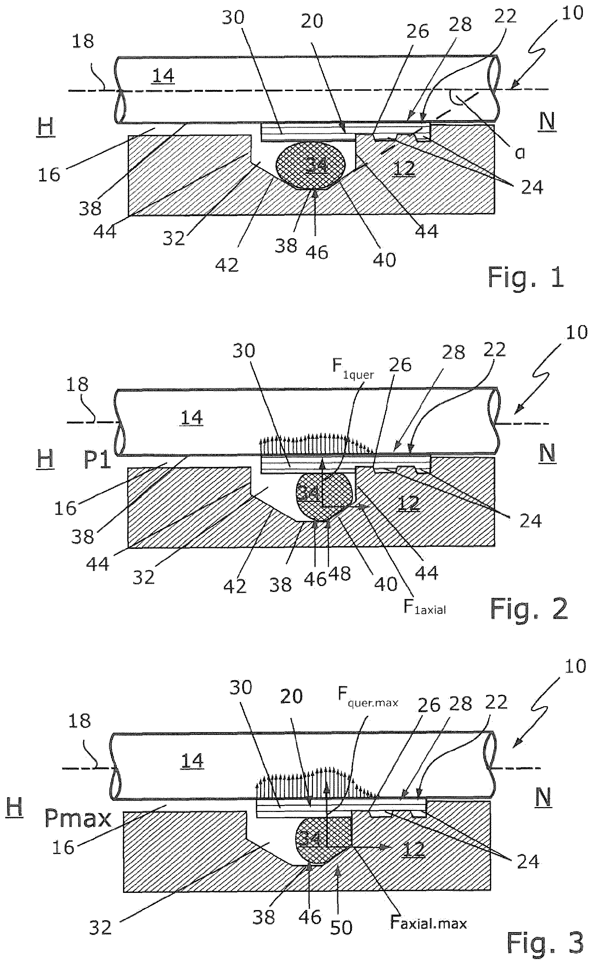

**Figur 1** zeigt eine Dichtungsanordnung **10** mit einem ersten Maschinenteil **12** und mit einem zweiten Maschinenteil **14,** die unter Ausbildung eines Dichtspalts **16** voneinander beabstandet angeordnet sind. Die beiden Maschinenteile 12, 14 sind entlang einer Bewegungsachse **18** relativ zueinander translatorisch bewegbar. Das erste Maschinenteil 12 kann beispielsweise als ein Zylinder und das zweite Maschinenteil 14 als ein im Zylinder geführter Kolben ausgebildet sein, wie dies in Fig. 1 der Fall ist. Zur Abdichtung eines mit einem Betriebsdruck beaufschlagbaren Hochdruckbereichs **H** von einem Niederdruckbereich **N** der Dichtungsanordnung 10 dient ein mit **20** bezeichnetes Dichtungselement. Das Dichtungselement 20 ist vorliegend als ein ringförmiges Radialdichtungselement ausgebildet.

Das Dichtungselement 20 ist in einer Dichtungshaltestruktur **22** des ersten Maschinenteils 12 lagefixiert gehalten angeordnet. Die Dichtungshaltestruktur 22 umfasst vorliegend mehrere Nuten **24,** in die sich das Dichtungselement 20 hineinerstreckt. Das Dichtungselement 20 wird bei seiner Montage am ersten Maschinenteil 12 in die Nuten 24 der Dichtungshaltestruktur 22 eingepresst und ist dadurch in den Nuten 24 dauerhaft im Presssitz gehalten angeordnet.

Wie aus Fig. 1 hervorgeht, weisen die Nuten 24 einen Querschnitt auf, der sich in Richtung auf die Bewegungsachse 18 erweitert. Dadurch wird das Verpressen des Dichtungselements 20 mit dem ersten Maschinenteil 12 vereinfacht. Darüber hinaus kann dadurch einem unerwünschten Einkerben des Dichtungselements 20 bzw. einem Abscheren des Dichtungselements 20 im Bereich von Nutkanten **26** der Nuten 24 bei axial am Dichtungselement 20 angreifenden Kräften (nicht gezeigt) entgegengewirkt werden.

Das Dichtungselement 20 dient bei dem gezeigten Ausführungsbeispiel zusätzlich der Gleitlagerung des zweiten Maschinenteils 14 am ersten Maschinenteil 12. Das Dichtungselement 20 weist dazu einen Gleitführungsabschnitt **28** auf, an dem das zweite Maschinenteil 14 im Gleitspiel-Formschluss geführt ist. Der Gleitführungsabschnitt 28 überdeckt die Dichtungshaltestruktur 22 des ersten Maschinenteils 12 in radialer Richtung und liegt am ersten Maschinenteil 12 formschlüssig an. Der Gleitführungsabschnitt des Dichtungselements 20 ist somit über seine gesamte Längserstreckung in radialer Richtung am ersten Maschinenteil 12 abgestützt.

Das Dichtungselement 20 weist eine Dichtlippe **30** auf, die sich von der Dichtungshaltestruktur 22 in axialer Richtung wegerstreckt.

Die Dichtlippe 30 erstreckt sich in axialer Richtung axial bis über eine Haltenut **32** des ersten Maschinenteils 12. Die Haltenut 32 ist von der Dichtungshaltestruktur 22 des ersten Maschinenteils 12 und damit auch von dem Gleitführungsabschnitt 28 des Dichtungselements 20 axial beabstandet angeordnet.

In der Haltenut 32 ist ein Vorspannelement **34** angeordnet. Das Vorspannelement 34 ist aus einem gummielastisch verformbaren Material, beispielsweise einem Elastomer, gebildet. Das Vorspannelement 34 dient dazu, die Dichtlippe 30 des Dichtungselements 18 gegen eine Dichtfläche **36** des zweiten Maschinenteils 14 vorzuspannen (zu pressen).

Die Haltenut 32 weist einen Nutboden oder Nutgrund **38** auf, der in axialer Richtung über eine erste Keilführungsfläche **40** und eine zweite Keilführungsfläche **42** mit Nutflanken **44** verbunden ist. Die Nutflanken 44 sind zur Bewegungsachse 16 orthogonal verlaufend ausgerichtet.

Die erste und die zweite Keilführungsfläche 40, 42 sind in axialer Richtung jeweils unter einem einheitlichen Winkel **α** mit α< 90° zur Bewegungsachse schräg verlaufend angeordnet. Es versteht sich, dass sich die Winkel α der beiden Keilführungsflächen 40, 42 auch voneinander unterscheiden können. Die erste bzw. die zweite Keilführungsfläche kann unter einem Winkel α mit 20° ≤ α ≤ 80° zur Dichtfläche schräg verlaufend angeordnet sein.

Wie aus Fig. 1 hervorgeht, ist die Haltenut 32 über den Dichtspalt 16 mit der Hochdruckbereich H der Dichtungsanordnung 10 fluidisch verbunden. Dadurch ist das Vorspannelement 34 mit einem im Hochdruckbereich der Dichtungsanordnung jeweils herrschenden Betriebsdruck eines Mediums (nicht gezeigt) beaufschlagbar.

Das Vorspannelement 34 kann, wie dies in Fig. 1 gezeigt ist, im nicht druckbelasteten Betriebszustand d. Dichtungsanordnung 10 einen ovalen bzw. elliptischen oder einen anderen, beispielsweise runden oder polygonalen, Querschnitt aufweisen.

Das Vorspannelement 34 ist bei dem erfindungsgemäßen Ausführungsbeispiel so bemessen, dass die Dichtlippe 30 im nicht druckbeaufschlagten Zustand der Dichtungsanordnung 10 bzw. des Hochdruckbereichs H an der Dichtfläche ohne eine Vorspannung (Kontaktpressung) formschlüssig anliegt.

Im nicht druckbeaufschlagten Zustand ist das Dichtungselement 20 in seiner mit **46** bezeichneten axialen Ausgangsposition relativ zum ersten Maschinenelement 12 angeordnet.

Das Vorspannelement 34 ist durch eine hochdruckseitige Beaufschlagung mit dem Betriebsdruck derart gegen und entlang der ersten Keilführungsfläche 40 bewegbar, dass die Dichtlippe 20 durch das Vorspannelement 34 mit einer aus dem jeweiligen Betriebsdruck abgeleiteten (und damit variablen) Anpresskraft gegen die Dichtfläche 36 vorgespannt wird.

In **Fig. 2** ist die Dichtungsanordnung 10 in einem druckbeaufschlagten zweiten Betriebszustand gezeigt, in dem der Hochdruckbereich H mit einem ersten Betriebsdruck **P₁** beaufschlagt ist.

Durch die damit einhergehende Druckbeaufschlagung des Vorspannelements 34 wird auf das Vorspannelement 34 eine Verschiebekraft F₁ₐₓᵢₐₗ in Richtung des Niederdruckbereichs N ausgeübt, durch die das Vorspannelement 34 aus seiner axialen Ausgangsposition 46 relativ zum ersten Maschinenteil 12 in eine davon beabstandet angeordnete erste Arbeitsposition 48 axial verschoben und unter Anlage an der ersten Keilführungsfläche 40 in radialer Richtung - entgegen seiner ihm innewohnenden elastischen Rückstellkraft - aufgeweitet wird. Das Vorspannelement drückt die Dichtlippe dadurch mit einer aus dem Betriebsdruck P₁ abgeleiteten Anpresskraft F_{1quer} gegen die Dichtfläche 38 des zweiten Maschinenteils 14. Ein Kontaktpressungsverlauf der Dichtlippe 30 gegen die Dichtfläche 38 ist mit den orthogonal zur Dichtfläche 38 verlaufenden Pfeilen verdeutlicht.

Bei einem sinkenden Betriebsdruck im Hochdruckbereich H rutscht das elastisch verformbare Vorspannelement 34 aufgrund seiner ihm innewohnenden Eigenelastizität aus seiner axial Stellung, d.h. aus der Arbeitsposition 48, entlang der ersten Keilführungsfläche 40 axial in Richtung auf den Hochdruckbereich H und seiner axialen Ausgangsposition 46 zurück.

In **Figur 3** ist die Dichtungsanordnung 10 in einem druckbeaufschlagten dritten Betriebszustand gezeigt, in dem der Hochdruckbereich H der Dichtungsanordnung 10 mit einem maximalen Betriebsdruck **Pₘₐₓ** beaufschlagt ist.

Durch die damit einhergehende Druckbeaufschlagung des Vorspannelements 34 wird auf das Vorspannelement 34 eine maximale Verschiebekraft F_{axial.max} in Richtung des Niederdruckbereichs N ausgeübt, durch die das Vorspannelement 34 aus seiner axialen Ausgangsposition 46 relativ zum ersten Maschinenteil 12 in eine davon beabstandet angeordnete zweite Arbeitsposition **50** axial verschoben und unter Anlage an der ersten Keilführungsfläche 40 in radialer Richtung - entgegen seiner ihm innewohnenden elastischen Rückstellkraft - aufgeweitet wird. Das Vorspannelement drückt die Dichtlippe dadurch mit einer aus dem Betriebsdruck Pₘₐₓ abgeleiteten Anpresskraft F_{quer.max} gegen die Dichtfläche 38 des zweiten Maschinenteils 14. Das Vorspannelement 34 liegt an der niederdruckseitigen Nuflanke 44 an. Ein Kontaktpressungsverlauf der Dichtlippe 30 gegen die Dichtfläche 38 ist mit den orthogonal zur Dichtfläche 38 verlaufenden Pfeilen verdeutlicht.

Bei einem sinkenden Betriebsdruck im Hochdruckbereich H rutscht das elastisch verformbare Vorspannelement 34 wie im Zusammenhang mit Figur 2 erläutert, in Richtung auf den Hochdruckbereich H und seiner axialen Ausgangsposition 46 zurück.

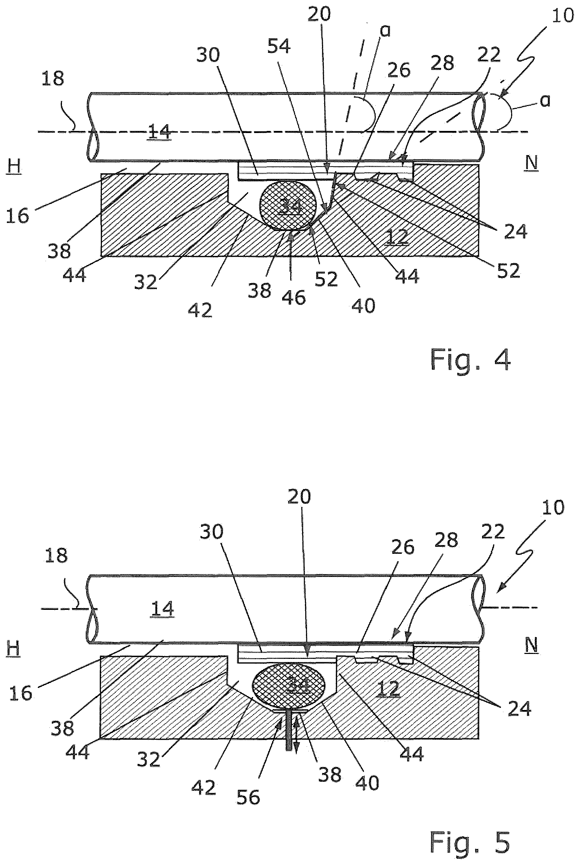

In **Figur 4** ist ein weiteres Ausführungsbeispiel der Dichtungsanordnung 10 in einer ausschnittsweisen Schnittdarstellung gezeigt. Die erste Keilführungsfläche 40 weist zwei Längsabschnitte 52 auf, die mit unterschiedlichen Winkeln α zur Dichtfläche schräg verlaufend angeordnet sind. Die niederdruckseitig angeordnete Nutflanke 44 der Haltenut 32 ist durch einen der Längsabschnitte 52 der ersten Keilführungsfläche 40 ausgebildet. Die erste Keilführungsfläche 42 ist somit unmittelbar mit einer dem zweiten Maschinenteil zuweisenden Oberfläche des ersten Maschinenteils 12 verbunden bzw. geht in diese über.

Die erste und ggf. die zweite Keilführungsfläche 40, 42 des ersten Maschinenteils 12 kann bei den vorstehend erläuterten Ausführungsformen mit einer Gleitbeschichtung **54** versehen sein, um eine möglichst reibungsarmes Gleiten des Vorspannelements 34 an der jeweiligen Keilführungsfläche 40 42 zu ermöglichen. Die Gleitbeschichtung 54 kann insbesondere trockenschmierend ausgeführt sein.

In **Fig. 5** ist ein weiteres Ausführungsbeispiel der Dichtungsanordnung 10 gezeigt, die sich von dem in Fig. 1 gezeigten Ausführungsbeispiel im Wesentlichen darin unterscheidet, dass in der Haltenut 32 ein Justierteil **56** für das Vorspannelement 34 angeordnet ist. Das Vorspannelement 34 liegt am Justierteil 56 an. Das Justierteil 56 ist relativ zum zweiten Maschinenteil 14 quer zur Bewegungsachse 18, d.h. vorliegend in einer radialen Richtung, verstellbar angeordnet. Mittels des Justierteils 56 kann eine nicht beanspruchte Grundvorspannung des Vorspanelements gegen die Dichtlippe 30 und somit der Dichtlippe 30 gegen die Dichtfläche 38 eingestellt bzw. justiert werden.

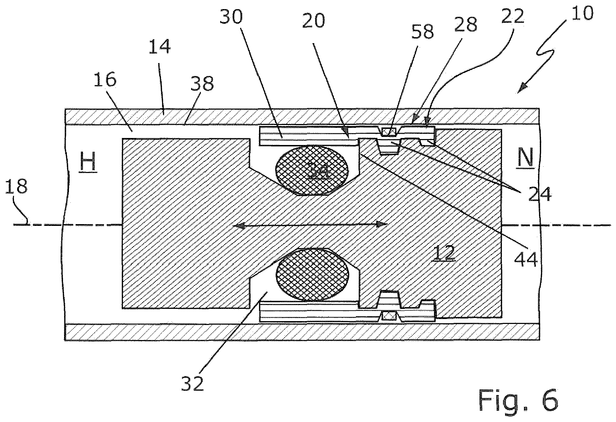

Die Dichtungsanordnung gemäß **Fig. 6** unterscheidet sich von dem in den Figuren 1 bis 3 gezeigten Dichtungsanordnung im Wesentlichen darin, dass das erste Maschinenteil 12 als ein Kolben und das zweite Maschinenteil 14 als ein Zylinder ausgeführt ist, in dem der Kolben entlang der Bewegungsachse 18 translatorisch verstellbar geführt ist. Das Vorspannelement ist ringförmig ausgebildet. Das Dichtungselement 20 ist als ein Radialdichtungselement ausgeführt und mittels eines Spannelements **58,** hier einer sogenannten Befestigungsschelle, an der Dichtungshaltestruktur 22 befestigt. Das Spannelement 58 umgreift das Dichtungselement 20 von außen und drückt dieses in eine der Nuten 24 der Dichtungshaltestruktur 22.

Das Dichtungselement 20 kann bei den in der Zeichnung gezeigten Dichtungsanordnungen insbesondere aus Polytetrafluorethylen oder einem anderen zähelastischen Werkstoff gebildet sein.

Die im Zusammenhang mit den Figuren 1 bis 7 erläuterten Dichtungsanordnungen 10 können beispielsweise als ein hydraulischer Aktuator, insbesondere Führerhauskippzylinder, Schwingungsdämpfer oder als Stoßdämpfer ausgebildet sein.

## Patentansprüche

1. Dichtungsanordnung (10) umfassend:
- ein erstes Maschinenteil (12) und ein zweites Maschinenteil (14), die unter Ausbildung eines Dichtspalts (16) voneinander beabstandet und entlang einer Bewegungsachse (18) relativ zueinander bewegbar angeordnet sind;
- ein Dichtungselement (20) mit einer Dichtlippe (30), das in mehreren Nuten (24) einer Dichtungshaltestruktur (22) des ersten Maschinenteils (12) im Preßsitz gehalten angeordnet ist, wobei sich die Dichtlippe (30) in axialer Richtung von der Dichtungshaltestruktur (22) wegerstreckt;
- ein Vorspannelement (34), das in einer Haltenut (32) des ersten Maschinenteils (12) angeordnet ist und mittels dessen die Dichtlippe (30) gegen eine Dichtfläche (38) des zweiten Maschinenteils (14) vorspannbar ist, um einen mit einem Betriebsdruck (P1, Pₘₐₓ) beaufschlagbaren Hochdruckbereich (H) gegenüber einem Niederdruckbereich (N) der Dichtungsanordnung (10) abzudichten,
wobei die Haltenut (32) eine Keilführungsfläche (40, 42) für das Vorspannelement (34) aufweist, die unter einem Winkel α mit α< 90° zur Bewegungsachse (18) schräg verlaufend angeordnet ist und wobei das Vorspannelement (34) durch eine hochdruckseitige Beaufschlagung mit dem Betriebsdruck (P₁, Pₘₐₓ) gegen die und entlang der Keilführungsfläche (40, 42) bewegbar ist, um die Dichtlippe (30) mit einer aus dem Betriebsdruck (P1, Pₘₐₓ) abgeleiteten Anpresskraft (F_{quer}, F_{quer.max}) gegen die Dichtfläche (38) vorzuspannen,
**dadurch gekennzeichnet, dass**
das Vorspannelement (34) derart dimensioniert ist, dass das Dichtungselement (20) im nicht druckbeaufschlagten Zustand des Hochdruckbereichs H ohne eine Vorspannung an der Dichtfläche anliegt.

2. Dichtungsanordnung nach Anspruch 1, **dadurch gekennzeichnet**, das die Keilführungsfläche (40, 42) unter einem Winkel α mit 20° ≤ α ≤ 80° zur Dichtfläche (38) schräg verlaufend angeordnet ist.

3. Dichtungsanordnung nach Anspruch 1 oder 2, **dadurch gekennzeichnet, dass** die Keilführungsfläche (40, 42) zumindest zwei Längsabschnitte aufweist, die mit unterschiedlichen Winkeln α1, α2 zur Dichtfläche schräg verlaufend angeordnet sind.

4. Dichtungsanordnung nach einem der vorhergehenden Ansprüche,
**dadurch gekennzeichnet, dass** zumindest die Keilführungsfläche (40, 42) mit einer, vorzugsweise trockenschmierenden, Gleitbeschichtung (56) versehen ist.

5. Dichtungsanordnung nach einem der vorhergehenden Ansprüche,
**dadurch gekennzeichnet, dass** das Vorspannelement (34) gummielastisch verformbar ist.

6. Dichtungsanordnung nach Anspruch 1, **dadurch gekennzeichnet, dass** die Haltenut (32) ein Justierteil (56) für das Vorspannelement (34) aufweist, das quer zur Bewegungsachse (18) relativ zum zweiten Maschinenteil (14) verstellbar angeordnet ist.

7. Dichtungsanordnung nach einem der vorhergehenden Ansprüche, **dadurch gekennzeichnet, dass** das Dichtungselement aus Polytetrafluoräthylen oder einem anderen zähelastischen Werkstoff gebildet ist.

8. Dichtungsanordnung nach Anspruch 1, **dadurch gekennzeichnet, dass** sich die Nuten (24) in Richtung auf die Bewegungsachse (18) erweitern.

9. Dichtungsanordnung nach einem der vorhergehenden Ansprüche, **dadurch gekennzeichnet, dass** das Dichtungselement einen Gleitführungsabschnitt (28) aufweist, an dem das zweite Maschinenteil (14) im Gleitspiel-Formschluss geführt ist, wobei der Gleitführungsabschnitt (28) an dem ersten Maschinenteil (12), vorzugsweise vollständig, formschlüssig anliegt ist.

10. Dichtungsanordnung nach einem der vorhergehenden Ansprüche, **dadurch gekennzeichnet, dass** eines der beiden Maschinenteile (12, 14) als ein Zylinder und das andere der beiden Maschinenteile (12, 14) als ein im Zylinder geführter Kolben ausgebildet sind, und wobei das Dichtungselement (20) ein ringförmiges Radialdichtungselement ist.

11. Dichtungsanordnung nach einem der vorhergehenden Ansprüche, die als ein hydraulischer Aktuator, insbesondere Führerhauskippzylinder, Schwingungsdämpfer oder als Stoßdämpfer ausgebildet ist.

## Claims

1. Sealing arrangement (10) comprising:
- a first machine component (12) and a second machine component (14) which, with a sealing gap (16) being formed, are arranged spaced apart from each other and so as to be able to be moved relative to each other along a movement axis (18);
- a sealing element (20) having a sealing lip (30) which is arranged so as to be retained in a press-fit in a plurality of grooves (24) of a sealing retention structure (22) of the first machine component (12), wherein the sealing lip (30) extends in an axial direction away from the sealing retention structure (22);
- a pretensioning element (34) which is arranged in a retention groove (32) of the first machine component (12) and by means of which the sealing lip (30) can be pretensioned against a sealing face (38) of the second machine component (14) in order to seal a high-pressure region (H) to which an operating pressure (P1, Pₘₐₓ) can be applied with respect to a low-pressure region (N) of the sealing arrangement (10), wherein the retention groove (32) has a wedge guiding face (40, 42) for the pretensioning element (34) which is arranged so as to extend obliquely at an angle α with α < 90° with respect to the movement axis (18) and wherein the pretensioning element (34) can be moved by means of a high-pressure-side application with the operating pressure (P1, Pₘₐₓ) against and along the wedge guiding face (40, 42) in order to pretension the sealing lip (30) against the sealing face (38) with a pressing force (F_{quer}, F_{quer,max}) derived from the operating pressure (P1, Pₘₐₓ),
**characterised in that** the pretensioning element (34) has such dimensions that the sealing element (20) in the state in which no pressure is applied to the high-pressure region H is in abutment with the sealing face without any pretensioning,

2. Sealing arrangement according to claim 1, **characterised in that** the wedge guiding face (40, 42) is arranged so as to extend obliquely at an angle α with 20° ≤ α ≤ 80° with respect to the sealing face (38).

3. Sealing arrangement according to claim 1 or 2, **characterised in that** the wedge guiding face (40, 42) has at least two longitudinal portions which are arranged so as to extend obliquely at different angles α1, α2 with respect to the sealing face.

4. Sealing arrangement according to any one of the preceding claims, **characterised in that** at least the wedge guiding face (40, 42) is provided with a, preferably dry lubricating, sliding coating (56).

5. Sealing arrangement according to any one of the preceding claims, **characterised in that** the pretensioning element (34) is resiliently deformable.

6. Sealing arrangement according to claim 1, **characterised in that** the retention groove (32) has an adjustment component (56) for the pretensioning element (34) which is arranged transversely with respect to the movement axis (18) so as to be able to be adjusted relative to the second machine component (14).

7. Sealing arrangement according to any one of the preceding claims, **characterised in that** the sealing element is formed from polytetrafluoroethylene or another viscoelastic material.

8. Sealing arrangement according to claim 1, **characterised in that** the grooves (24) expand in the direction towards the movement axis (18).

9. Sealing arrangement according to any one of the preceding claims, **characterised in that** the sealing element has a sliding guiding portion (28), on which the second machine component (14) is guided with sliding play/positive-locking engagement, wherein the sliding guiding portion (28) is in abutment with the first machine component (12), preferably completely, in a positive-locking manner.

10. Sealing arrangement according to any one of the preceding claims, **characterised in that** one of the two machine components (12, 14) is constructed as a cylinder and the other of the two machine components (12, 14) is constructed as a piston which is guided in the cylinder, and wherein the sealing element (20) is an annular radial sealing element.

11. Sealing arrangement according to any one of the preceding claims, which sealing arrangement is constructed as a hydraulic actuator, in particular a driver cabin tipping cylinder, vibration damper or as a shock absorber.

## Revendications

1. Système de joint d'étanchéité (10), comprenant :
- un premier élément de machine (12) et un deuxième élément de machine (14), qui sont disposés en étant distants l'un de l'autre en formant une fente d'étanchéité (16) et en étant mobiles l'un par rapport à l'autre le long d'un axe de déplacement (18) ;
- un élément d'étanchéité (20) muni d'une lèvre d'étanchéité (30), qui est disposé en étant maintenu en ajustement serré dans plusieurs rainures (24) d'une structure de retenue (22) de joint d'étanchéité du premier élément de machine (12), sachant que la lèvre d'étanchéité (30) s'éloigne en direction axiale de la structure de retenue (22) de joint d'étanchéité ;
- un élément de précontrainte (34), qui est disposé dans une rainure de retenue (32) du premier élément de machine (12) et au moyen duquel la lèvre d'étanchéité (30) peut être précontrainte contre une surface d'étanchéité (38) du deuxième élément de machine (14), afin de rendre étanche par rapport à une région basse pression (N) du système de joint d'étanchéité (10) une région haute pression (H) pouvant être sollicitée par une pression de service (P₁, Pₘₐₓ),
sachant que la rainure de retenue (32) présente une surface de guidage cunéiforme (40, 42) pour l'élément de précontrainte (34), qui est disposée en s'étendant en oblique par rapport à l'axe de déplacement (18) sous un angle a, avec α < 90°,
et sachant que l'élément de précontrainte (34) peut être déplacé contre la surface de guidage cunéiforme (40, 42) et le long de cette dernière par une sollicitation côté haute pression avec la pression de service (P₁, Pₘₐₓ), afin de précontraindre la lèvre d'étanchéité (30) contre la surface d'étanchéité (38) avec une force de pression de contact (F_{quer}, F_{quer.max}) dérivée de la pression de service (P₁, Pₘₐₓ), **caractérisé en ce que**
l'élément de précontrainte (34) est dimensionné de telle sorte que l'élément d'étanchéité (20), dans l'état non sollicité en pression de la région haute pression (H), s'applique sans précontrainte contre la surface d'étanchéité.

2. Système de joint d'étanchéité selon la revendication 1, **caractérisé en ce que** la surface de guidage cunéiforme (40, 42) est disposée en s'étendant en oblique par rapport à la surface d'étanchéité (38) sous un angle a, avec 20°≤ α ≤ 80°.

3. Système de joint d'étanchéité selon la revendication 1 ou 2, **caractérisé en ce que** la surface de guidage cunéiforme (40, 42) présente au moins deux parties longitudinales qui sont disposées en s'étendant en oblique par rapport à la surface d'étanchéité sous des angles différents α₁, α₂.

4. Système de joint d'étanchéité selon l'une des revendications précédentes, **caractérisé en ce qu'**au moins la surface de guidage cunéiforme (40, 42) est pourvue d'un revêtement antifriction (56), de préférence lubrifiant à sec.

5. Système de joint d'étanchéité selon l'une des revendications précédentes, **caractérisé en ce que** l'élément de précontrainte (34) est déformable par l'élasticité du caoutchouc.

6. Système de joint d'étanchéité selon la revendication 1, **caractérisé en ce que** la rainure de retenue (32) présente une partie d'ajustement (56) pour l'élément de précontrainte (34), qui est disposée avec possibilité de réglage transversalement à l'axe de déplacement (18) par rapport au deuxième élément de machine (14).

7. Système de joint d'étanchéité selon l'une des revendications précédentes, **caractérisé en ce que** l'élément d'étanchéité est constitué de polytétrafluoréthylène ou d'un autre matériau viscoélastique.

8. Système de joint d'étanchéité selon la revendication 1, **caractérisé en ce que** les rainures (24) s'élargissent dans la direction de l'axe de déplacement (18).

9. Système de joint d'étanchéité selon l'une des revendications précédentes, **caractérisé en ce que** l'élément d'étanchéité présente une partie de guidage à glissement (28) sur laquelle le deuxième élément de machine (14) est guidé en engagement positif avec jeu de glissement, sachant que la partie de guidage à glissement (28) est appliquée en engagement positif contre le premier élément de machine (12), de préférence complètement.

10. Système de joint d'étanchéité selon l'une des revendications précédentes, **caractérisé en ce qu'**un des deux éléments de machine (12, 14) est réalisé sous la forme d'un cylindre et l'autre des deux éléments de machine (12, 14) sous la forme d'un piston guidé dans le cylindre, et sachant que l'élément d'étanchéité (20) est un élément d'étanchéité radial annulaire.

11. Système de joint d'étanchéité selon l'une des revendications précédentes, qui est réalisé sous la forme d'un actionneur hydraulique, en particulier un vérin de basculement de cabine de conduite, d'un amortisseur de vibrations ou d'un amortisseur de chocs.
